(19) Europäisches Patentamt
European Patent Office
Office européen des brevets

(11) Publication number: **0 211 359 A1**

# (12) EUROPEAN PATENT APPLICATION

(21) Application number: 86110315.8

(51) Int. Cl.[4]: C09D 7/12

(22) Date of filing: 25.07.86

(30) Priority: 26.07.85 US 759172

(43) Date of publication of application: 25.02.87 Bulletin 87/09

(84) Designated Contracting States: AT BE CH DE FR GB IT LI LU NL SE

(71) Applicant: UNION CARBIDE CORPORATION
39 Old Ridgebury Road
Danbury Connecticut 06817(US)

(72) Inventor: Hoy, Kenneth Look
839 MacQueen Boulevard
St. Albans 25177, West Viginia(US)
Inventor: Richey, Forrest Alden, Jr.
Route 6 Box 138
Charleston 25311, West Viginia(US)

(74) Representative: Wuesthoff, Franz, Dr.-Ing. et al
Patentanwälte Wuesthoff -v. Pechmann-Behrens-Goetz Schweigerstrasse 2
D-8000 München 90(DE)

## (54) High solids coating compositions.

(57) High solids coating compositions are made by blending a crosslinkable organic polymer, a solvent, at least one reactive urea derivative, a crosslinking agent and optionally a crosslinking catalyst. The resultant high solids coating compositions can be either solutions or dispersions depending upon the particular polymer and solvent and the reactive urea chosen as the reactive cosolvent or reactive diluent. The reactive urea derivatives can be mixed with reactive carbamate derivatives.

EP 0 211 359 A1

# HIGH SOLIDS COATING COMPOSITIONS

## Field of the Invention

This invention pertains to the preparation of high solids coating compositions and more particularly to the use of nearly non-volatile substituted ureas as reactive diluents and reactive cosolvents together with an organic volatile solvent to form the liquid vehicle for the application of film forming polymers. High solids coatings for the purpose of the present invention shall mean organic coatings compositions in which the organic volatile solvents of the coating are minimized by the substitution of a reactive diluent and/or a reactive solvent for all or a part of the volatile solvent or diluent usually employed to make useful coating compositions from a particular film forming polymer. The coating composition may be of two types: (1) stable dispersions of an organic polymer in an organic diluent - (so called NAD or organosol), (2) solutions of organic polymers in organic solvents. It is the intent of this invention to disclose the preparation of high solids coatings compositions which utilize at least one organic, non-volatile, substituted, reactive urea which is also a solvent or dispersant for a film forming polymer to replace a part or all of the thinner required to reduce the coatings formulation to the required applications viscosity.

## Background of the Invention

The use of volatile organic solvents or diluents to dissolve or disperse high polymers in the formulation of organic polymer compositions and their subsequent application onto various substrates requires the handling and disposal of large volumes of organic materials. Because of the environmental objections to solvent emissions and the increasingly frequent discovery of latent health problems of persons exposed to certain solvent vapors, alternative methods of coatings application become a necessity. Consequently there is a renewed interest in coatings technologies which can minimize the emission of Volatile Organic Compounds - (VOC). One of the most promising technologies for the reduction of solvent emissions is high solids coatings. In this technology the technical approaches have been:

(1) to increase the amount of polymer which can be dissolved and applied by a given amount of solvent by lowering the molecular weight of the polymer and

(2) to prepare a stable dispersion of a high polymer in a volatile organic diluent.

In the first approach (solution), lowering the molecular weight of the polymer has serious consequences on the end-use performance of the coating. These problems have been compensated for by incorporating reactive functionality along the backbone and/or at termination of the polymer molecule, and after application converting these relatively low molecular weight polymers to high polymers through coupling and/or crosslinking reactions. Even with the advent of highly specialized reactive polymer systems, there is a limit as to how much the molecular weight can be lowered to attain higher solids. Beyond this limit the polymers are no longer film forming, have poor application properties and in general do not provide acceptable coating compositions.

The second approach (stable dispersions), is not without its adverse consequences also. While it is true that dispersions have much lower viscosities at much higher solids concentrations, other problems arise. Because of the physical constraints of particulate packing, pigmentation becomes difficult and film formation becomes a sintering process. Most often, in these systems, there is the need of fugitive plasticizers to insure the continuity of the film. Even then gloss, film smoothness, hardness, adhesion, pigmentation and ultimate performance can be adversely affected.

To address these newer problems imposed by adoption of either of these high solids technologies, coatings technologists have incorporated reactive solvents and/or reactive diluents into coatings formulations. Reactive solvents and reactive diluents as used herein are nearly non-volatile organic materials which have as an integral part of their structure a plurality of functional groups which are coreactive with the base film forming polymer and/or required crosslinking agents, and can replace a part or all of the volatile organic solvent and/or diluent required to reduce the formulation to a reasonable application viscosity. They may be liquids or solids providing, those which are solids are soluble, fusible, and compatible with the film forming components either before or after application and subsequent cure.

Adoption of this definition imposes some requirements on materials which can be considered as reactive solvents and reactive diluents. They must be: (1) essentially non-volatile under the conditions required for cure of the coating, (2) good solvents for the film forming polymers or in the case of the dispersions, be temporary plasticizers for the base polymer during film formation, (3) latently co-reactive with the film forming polymer and/or the cross-linking agents under conditions

required for polymer conversion, and finally (4) be able to provide final film properties required for the intended application. Because reactive diluents and reactive solvents do become a considerable part of the final film, the properties of the coating are related not only to the properties of the film forming polymer but also to the properties attained from the reactive solvent or reactive diluent upon chemical incorporation into the composition. Often it is necessary to adjust the structure of the film forming polymer to compliment the structure of the reactive diluent. Such polymers are designed for this intended use, and are preferable to polymers used in much of the prior art. However, even polymers of the prior art can be formulated, using reactive diluents and/or solvents, into coating compositions with lower emissions than the corresponding formulation of these identical polymers using only volatile non-reactive solvents and/or diluents.

The advantages of high solids coatings can be illustrated by the use of compositional phase diagrams. Since the teachings of the present invention may be applicable to coatings of either the dispersion type or solution type two compositional phase diagrams will be required to understand the phase relationships. Figure 1 is a simplified phase diagram of a hypothetical dispersion high solids coatings system, representing the volatile diluent as A, the reactive diluent as C, and the film forming polymer including the cross-linking agent as B. The area of a single phase, 2, is separated from the area of two phases, 4, by the curved line A-A'-B. The point E represents the application composition of the high solids dispersion coating. The straight line E-D represents the changing composition during film formation; the dashed line E-B is the film forming pathway that the high solids coating of the prior art would take. In the later case the diluent C' is the fugitive plasticizer required for particle coalescence and must be removed from the film by vaporization otherwise performance properties would be degraded. In the former case the reactive diluent remains an integral part of the film and is incorporated into the polymeric film by reacting with the polymer through the reactive functionalities provided. The salient features of the phase diagram are: (i) the reactive diluent is compatible with - (soluble in) the base film forming polymer; (ii) the reactive diluent serves as a transient plasticizer to allow film coalesence; (iii) the reactive diluent need not be totally soluble in the volatile diluent, but rather is initially distributed between the organic liquid phase and the polymer phase and during evaporation of the volatile diluent is translocated totally to the polymer phase; (iv) because the reactive diluent is essentially non-volatile and becomes a part of the final coating, the total non-volatiles - (total solids) of the coating is equal to the sum of the polymer including the cross-linker and the reactive diluent thus allowing lower volatile organic emissions.

Figure 2 is a simplified compositional phase diagram of a hypothetical high solids solution coating composition representing A, as the volatile organic solvent, the reactive solvent as C, and the film forming polymer including any required cross-linking agent as B. Because of economic constraints the volatile organic solvent, often lower cost hydrocarbons, alone is generally not a good solvent for the film forming polymer, and thus the area of a single phase, 2, is separated from the area of two phases, 4, by the curved line A-A'-B. The point E represents the application composition of the high solids solution coating. The straight line E-D represents the changing compositions during the film forming process. The dashed line E-B represents the film forming pathway of a corresponding solution coating when C is a volatile organic solvent. The notable features of Figure 2 are: (i) The reactive solvent is generally miscible with the volatile organic solvent; the line A-C is in the one phase region in its entirety. (ii) The coatings polymer is soluble in the reactive solvent; the line C-B is in the one phase region in its entirety. (iii) The reactive solvent is essentially non-volatile and becomes a part of the final coating and consequently, the total solids (non-volatiles) in the film, point D, is equal to the sum of the polymer including any required cross-linker and the reactive solvent.

In both cases the reactive diluent and/or reactive solvent becomes a part of the final coating and as such must contribute to, and not detract from the overall coating performance. The reaction product of polymer, reactive diluent and/or reactive solvent and the cross-linking agent must have suitable properties such as toughness, adhesion, impact resistance, abrasion resistance, scratch resistance, resistance to solvents, chemicals, acids, and bases. It must have good color, gloss, and stability as is required according to the end use application. All of the above is well understood by those skilled in the art.

Initially the coatings technologist adapted materials which were readily available for use as reactive solvents and reactive diluents. Many of these materials have limited utility because of excessive volatility, limited reactivity, poor compatibility with the base film forming system, and in general degradation of overall coatings performance. Typical of the early reactive solvents and diluents are higher boiling polyols e.g., glycerol, monoglycerides of unsaturated fatty acids, 1,2,6-hexanetriol and its mono ester derivatives, ethylene glycol, diethylene glycol, propylene glycol, dipropylene glycol, hexylene glycol, and 1,4-butanediol. These materials

have many inherent disadvantages including excessive volatility, poor solvency, in organic media, marginal co-reactivity, and marginal compatibility with the base film forming polymer. The lower molecular weight members are especially prone to catering and other application defects while the higher members of the series do not adequately reduce the viscosity or provide sufficient co-reactivity with the base polymer and or cross-linking agent. Later polyol derived from alkylene oxides were used. Typical of these materials are polypropylene glycols, polyethylene glycol, and copolymers in the molecular weight range of 225 to 3000; these materials have improved non-volatile character but do not provide either good solvency for a variety of film forming polymers or acceptable exterior durability in the more demanding applications. Of special interest in this category are the polyether diols derived from bisphenol A and ethylene or propylene oxide. Still later, hydroxy terminated polyesters were introduced. These materials are low molecular weight polyesters 300 to 3000 derived from caprolactone, cyclic diols, e.g., cyclohexane dimethanol and dibasic acids such as phthalic, isophthalic maleic, succinic acid. Often small quantities of triols or tetrols were used to create polyfunctionality in the polyester. These materials are in effect very low moleculer weight oil less alkyds. They are characterized by a broad compatibility, good co-reactivity, and low volatility. These materials represent an improvement over the polyether diols, however they provide neither the viscosity reduction for many applications methods including spray and electrostatic spray nor performance required for the more demanding end uses

Today the state of the art has advanced to the point where the real needs are apparent and further improvement in high solids coatings systems will require more versatile reactive solvents and reactive diluents.

It is the objective of the present invention to demonstrate coating compositions which employ one or more nearly non-volatile, substituted ureas to replace all or part of the volatile organic solvent or diluent used in high solids coating compositions. The substituted ureas of the present invention have as an integral part of their structure a plurality of reactive -OH and/or -NHCO-groups which are capable, through the application of heat and/or in the presence of catalytic agents when required, of reacting with the base film forming polymers and cross-linking agents.

It is the further objective of this invention to provide reactive solvents/reactive diluents which serve to provide high solids coatings compositions in the form of either solutions or dispersions.

It is still another objective of this invention to provide reactive solvents and reactive diluents which will not degrade the quality or performance of the final finished coating.

## Summary of the Invention

High solids coatings compositions meeting the objects above can be prepared by blending;

(1) at least one crosslinkable organic polymer free of amide groups;

(2) at least one reactive urea derivative having the generic formula:

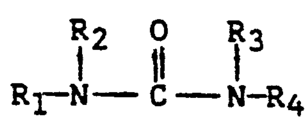

wherein

each of $R_1$, $R_2$, $R_3$ and $R_4$ is a monovalent radical selected from hydrogen, alkyl groups having 1 to 10 carbon atoms, hydroxyalkyl groups having 2 to 4 carbon atoms and one or more hydroxyl groups, hydroxyalkyleneoxy groups having one and hydroxypolyalkyleneoxy groups having one or more hydroxyl groups and with the provisos that;

(i) said urea contains at least one -NH and one -OH group or at least 2 OH groups or at least 2 -NH groups;

(ii) $R_1$ and $R_2$ or $R_1$ and $R_3$ can be linked to form a ring structure; and

(iii) $R_1$, $R_2$, $R_3$ and $R_4$ are never all hydrogen at the same time;

(3) a volatile organic solvent and/or diluent

(4) a crosslinking amount of a crosslinking agent; and

(5) optionally, a catalytic amount of a crosslinking catalyst.

The monovalent radicals in the urea derivatives having the generic formula above may be substituted with ether, halogen, quaternary ammonium, sulfonium, phosphonium and like substituents.

Suitable organic polymers for use in the present invention include polymers which contain a plurality of reactive -OH and/or -NHCOO-groups.

Preferred crosslinkable organic polymers for use in this invention include:

Polyester alkyd resins

Hydroxyl containing epoxy fatty acid esters

Hydroxyl containing polyesters

Hydroxyl containing alkyd resins

Hydroxyl containing acrylic interpolymers

Hydroxyl containing vinyl interpolymers, such as styrene/acrylic copolymers.

The ratio of the amounts of solvent and reactive diluent or cosolvent used to prepare the coating compositions is dictated by the type of coating desired. Thus in the dispersion type, the amount of reactive diluent is usually determined by the film properties desired. Usually these can be attained by ratios of reactive diluent/solvent in the range of 5/95 to 30/70. On the other hand in the solution type the ratio of reactive cosolvent to solvent is limited by the solubility characteristics of the polymer. Thus a more soluble polymer would require less reactive cosolvent while a less soluble polymer would require more. Generally, polymers of these types are soluble in a blend of reactive cosolvent/solvent of 20/80 to 60/40. In practice the base coating may be formulated at rather high ratios of reactive cosolvent/solvent i.e., 60/40 to 90/10 and then let down with solvent to attain application viscosities. One skilled in the art can easily establish the optimum ratios for a particular caoting composition with a minimum of experimentation. The amount of organic polymer used in these compositions is not narrowly critical. However a practical range for the solution type is 15 to 45% by weight of polymer with the amount of reactive solvent being 10 to 20% by weight, the amount of crosslinker being 10 to 30% by weight and the amount of solvent being 60 to 5% by weight.

A practical range of organic polymer used for the dispersion type of coating composition is 35 to 50% by weight, with the amount of reactive diluent being 5 to 20% by weight, the amount of crosslinker being 5 to 20% by weight and the amount of solvent being 55 to 10% by weight.

The reactive urea derivatives in the coating composition claimed herein can be designated as either reactive cosolvents or reactive diluents depending on the type of coatings formed. In the case of coating compositions which are dispersions, the ureas function as reactive diluents. In the case of coating compositions which are solutions, the ureas function as reactive cosolvents.

The term reactive is used herein to mean that the urea derivatives can be incorporated into the finished coating by crosslinking agents which cure through NH and/or OH groups.

The reactive ureas used in this invention may be represented by the following:

N-(2-hydroxyethyl)-N,N'-ethylene urea

N-(2-hydroxyethyl)-N'-butyl urea

N,N-bis-(2-hydroxyethyl)-N'-butyl urea

N,N-bis-(2-hydroxyethyl) urea

N,N'-bis-(2-hydroxyethyl) urea

N-(2-hydroxy-1-propyl)-N'-butyl urea

N,N'bis-(3-hydroxy-2,2-dimethyl-1-propyl) urea

N,N'-dimethyl urea

tetrakis-(2-hydroxyethyl) urea

tris-(2-hydroxyethyle) urea

N,N'-bis-(2-hydroxyethyl)-N,N'-ethylene urea

N-(2-hydroxyethyl)-N'-methyl urea

N,N'-bis-(2-hydroxyethyl)-N-ethyl urea

N,N'-bis-(2-hydroxyethyl)-N,N'-diethyl urea

N,N'-bis-(2-hydroxyethyl)-N,N'-dimethyl urea

N,N,N'-tris-(2-hydroxyethyl)-N'-methyl urea

N,N'-diethyl urea

N-butyl-N'-(2-ethyl-1-hexyl) urea

N-butyl-N'-propyl urea

N-methyl-N'-butyl urea

N-methyl-N'-2-propyl urea

Illustrative of suitable crosslinking agents for the high solids coating compositions described herein are polyepoxides, such as the glycidyl epoxides or cycloaliphatic epoxides (Araldite® 297, Epon® 582, etc.) and the aminoplasts such as the reaction product of an aldehyde (e.g. formaldehyde, acetaldehyde, paraformaldehyde, trioxane, ) with urea, thiourea, melamine, benzoguanamine, acetoguanamine, dicyandiamine and the like. The aminoplasts may be etherified with a lower alcohol

such as methyl, ethyl, butyl, isobutyl, propyl or isopropyl alcohol. Aminoplasts which are of particular value in high solids coating compositions are the methylated urea-formaldehyde resins, the alkylated benzoguanamines and methylated melamine-formaldehyde resins with the latter being the most desirable.

The choice of catalysts suitable for the practice of this invention is dictated by the choice of crosslinking reaction. Thus if aminoplasts are employed to crosslink the organic polymer and reactive urea, an acidic catalyst is preferred. Illustrative of the acidic catalyst of the invention are one or more of the following: alkylsulfonic acids such as methane sulfonic acid, ethane sulfonic acid and the like, arylsulfonic acids such as p-toluene sulfonic acid, alkylaryl sulfonic acids such as a $C_{10}$ to $C_{18}$ alkylbenzene sulfonic acid, sulfamic acid, dialkyl hydrogen phosphates such as diamyl hydrogen phosphate, aryl hydrogen phosphates such as diphenyl hydrogen phosphate and phosphoric acid itself.

The diisocyanates and blocked diisocyanates are often employed to crosslink these polymers. The polymer isocyanates have been extensively reviewed by Wicks (Prog. Org. Chem., 3, 73 - (1975)). A blocked isocyanate is an isocyanate adduct which is stable at ambient conditions but dissociates to regenerate isocyanate functionality under the influence of heat. Temperatures of 120 to 250°C are necessary to release the blocking groups which are usually volatilized from the coating. The dissociation temperature of blocked isocyanates based on commercially utilized blocking agents decrease in the order: epsilon-caprolactam, phenols, methyl ethyl ketoxime, and active methylene compounds. Blocked isocyanates which are stable have been described by Rosthauser and Williams (Proceedings Polymeric Materials Science and Engineering; Vol. 50, pg. 344 (1984)). Catalysts which promote the urethane reaction are well known to the art and are illustrated by tertiary amines such as triethyl amine and bis(dimethylaminoethyl)ether, organometallic salts of tin, mercury, zinc and bismuth such as dibutyl tin diacetate, zinc octoate, phenyl mercuric acetate and bismuth octoate.

The amount of catalyst required to promote the reaction is dependent upon the curing conditions required in the coating process. Those skilled in the art may readily determine the catalyst level with a minimum of experimentation. In practice if a catalyst is desired it is usually in the level of 0.02 to 1% based on the weight of the organic polymer.

Background of the curing relations of hexamethoxymethylmelamine may be found in an article by R. Saxon et al. in J. Appl. Poly. Sci. 8, 475 - (1964).

In the practice of this invention, one may also employ a mixture of at least one reactive urea derivative and at least one reactive carbamate derivative, the latter having the generic formula:

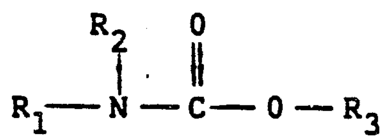

wherein each of $R_1$ and $R_2$ is a monovalent radical selected from hydrogen, alkyl groups having 1 to 10 carbon atoms, hydroxyalkyl groups having 2 to 4 carbon atoms and one or more hydroxyls, hydroxyalkylenoxy groups having one or more hydroxyl groups, and hydroxypolyalkyleneoxy groups having one or more hydroxyl groups, and $R_3$ is a monovalent radical selected from alkyl groups having 1 to 10 carbon atoms, hydroxyalkyl groups having about 4 carbon atoms and one or more hydroxyl groups, hydroxyalkyleneoxy groups having one or more hydroxyl groups and hydroxypolyalkylenoxy groups having one or more hydroxyl groups, with the provisos that said carbamate contains at least one -NH and one -OH group or at least 2 -OH groups, and that $R_1$ and $R_2$ or $R_1$ and $R_3$ can be linked to form a ring structure.

The reactive carbamates used in this invention may be represented by the following:

2-hydroxyethyl 1-butylcarbamate

1-hydroxy-2-propyl 1-propylcarbamate

2-hydroxy-1-propyl 1-propylcarbamate

1-hydroxy-2-propyl 1-butylcarbamate

2-hydroxy-1-propyl 1-butylcarbamate

2-methyl-1-propyl 2-hydroxyethylcarbamate

2-propyl bis (2-hydroxyethyl) carbamate

2-hydroxyethyl 2-hydroxyethylcarbamate

2-hydroxyethyl (2-hydroxyethyl) (ethyl) carbamate

2,3-dihydroxy-1-propyl dimethylcarbamate

2,3-dihydroxy-1-propyl ethylcarbamate

1,3-dihydroxy-2-propyl 1-butylcarbamate

2,3-dihydroxy-1-propyl tetramethylenecarbamate

2-hydroxyethyl bis-(2-hydroxyethyl) carbamate

3-(2,3-dihydroxy-1-propyl) oxazolidone

5-(hydroxymethylene) oxazolidone

3-(2-hydroxyethyl)-5-(hydroxymethylene) oxazoldione

4-(hydroxymethylene) oxazolidone

2-hydroxyethyl carbamate

1-butyl 2,3-dihydroxy-1-propylcarbamate

The invention is further described in the examples which follow. All parts and percentages are by weight unless otherwise specified.

EXAMPLE 1

Preparation of N-(2-Hydroxyethyl)-N,N'-Ethylene Urea

3555 grams (34.2 moles) of aminoethylethanolamine and 3130 grams (34.8 moles) of dimethyl carbonate were charged to a 12-liter, 5-necked flask equipped with stirrer, heating mantle, water cooled condenser, distillation head, thermometer and nitrogen purge. The flask contents were heated to 80°C and stirred for 3 hours before being allowed to stand overnight. The mixture was heated again while removing methanol and other volatile materials up to 195°C kettle temperature and 140°C vapor temperature. A total of 1960 grams of condensate was collected. The rest of the material in the flask was subjected to vacuum 1.33 mbar distillation giving material boiling 210°C ( 1 mm Hg.) A total of 3671 g of distillate and 412 g residue resulted from the distillation. The distilled product could be further purified by recrystallization from 2-butanone.

EXAMPLE 2

Preparation of N-Hydroxyethyl-N'-Butyl Urea

61.7 grams (1 mole, 99% purity) of ethanolamine and 170 grams of dichloromethane were charged to a flask equipped with stirrer, thermometer, feed tank, distillation head and condenser. 101 grams (1 mole, 98% purity) of butyl isocyanate was fed dropwise with stirring and cooling (dry ice bath) during 1.5 h such that the temperature of the reaction mixture was maintained at about 30°C. At this time some solid had been formed and it was redissolved by heating to 46°C. The mixture was stirred at 46°C for an additional two hours and then freed of volatile materials by stripping at 90°C and 2.66 mbar (2 mm Hg) leaving 181 g of solid product. This material could be recrystallized from 2-butanone giving tiny white crystals melting at 67°C.

EXAMPLE 3

Preparation of N-Hydroxypropyl-N'-Butyl Urea

75.1 grams (1 mole) of 1-amino-2-propanol and 180 grams of dichloromethane were charged to a flask equipped as in Example 2. To the resulting mixture was added 101 grams (1 mole, 98% purity) of butyl isocyanate dropwise with cooling and stirring during 1 h 10 min and at a temperature of about 35°C. The resulting mixture was stirred another 2 h at 40°C and then stripped 2 h at 80°C and 2.66 mbar (2 mm Hg)pressure leaving 178.4 g crude product which was a liquid. This material was 87 area % one component by gas chromatography.

EXAMPLE 4

N-(2-Hydroxyethyl)-N,N'-Ethylene Urea/Cargill-7451 Resin Crosslinked by Cymel 323

A solvent borne high solids coating composition was prepared by dissolving 16.38 parts of a carboxylated organic polymer (Cargill®-7451) in 47.64 parts of CELLOSOLVE Acetate and 10.16 parts of hydroxyethyl ethylene urea. To this solution was then added 25.81 parts of aminoplast - (Cymel®-323, American Cyanamid) to make a total of 100 parts. The resultant coating composition contained 47.2% non-volatiles and was cast (wet film thickness 30µm (1.2 mils) on a steel panel and cured at 121°C (250°F) for 45 minutes resulting in

a hard, tough glossy coating. A similar coating was prepared on aluminum foil and by extraction was found to be over 91% insoluble in boiling toluene.

EXAMPLE 5

Hydroxyethyl Butylcarbamate + Hydroxyethyl Ethylene Urea/ Cargill-7451 Resin Crosslinked by Cymel-323

A solvent borne high solids coating composition was prepared by dissolving 16.38 parts of a carboxylated organic polymer (Cargill®-7451) in 47.64 parts of CELLOSOLVE Acetate and 5.09 parts each of hydroxyethyl butyl carbamate and hydroxyethyl ethylene urea. To this solution was then added 25.81 parts of aminoplast (Cymel®-323, American Cyanamid) to make a total of 100 parts. The resultant coating composition contained 47.2% non-volatiles and was cast (wet film thickness 30 µm (1.2 mils) on a steel panel and cured at 121°C (250°F) for 45 minutes resulting in a hard, tough, glossy coating. A similar coating was prepared on aluminium foil and by extraction was found to be over 88% insoluble in boiling toluene.

EXAMPLE 6

Comparative Solvent Borne Coating Composition Crosslinked by Cymel-323

A comparative coating composition of the prior art was prepared by dissolving 20.75 parts of a carboxylated organic polymer (Cargill®-7451) in 73.18 parts of CELLOSOLVE Acetate. To this solution was then added 6.07 parts of aminoplast - (Cymel®-323, American Cyanamid) to make a total of 100 parts. The resultant coating composition contained 25.6% non-volatiles and was cast (wet film thickness 30 µm (1.2 mils)on a steel panel and cured at 121°C (250°F)for 45 minutes resulting in a hard, tough, glossy coating. A similar coating was prepared on aluminum foil and by extraction was found to be over 78% insoluble in boiling toluene.

EXAMPLE 7

Preparation of N,N'-bis-(2-Hydroxyethyl) Urea

Using the method of Example 1 excepting that each mole of aminoethyl ethanolamine is replaced by two moles of ethanolamine, a mixture containing N,N'-bis(2-hydroxyethyl) urea is obtained.

EXAMPLE 8

Preparation of N,N-bis-(2-Hydroxyethyl) Urea

Using the method of Example 1 excepting that each mole of aminoethyl ethanolamine is replaced by one mole of diethanolamine plus one mole of ammonia, a mixture containing N,N-bis-(2-hydroxyethyl) urea is obtained.

EXAMPLE 9

Preparation of Tetrakis-(2-Hydroxyethyl) Urea

Using the method of Example 1 excepting that each mole of aminoethyl ethanolamine is replaced by two moles of diethanolamine, a mixture containing tetrakis-(2-hydroxyethyl) urea is obtained.

EXAMPLE 10

Preparation of N,N'-bis-(3-Hydroxy-2,2-Dimethyl-1-Propyl) Urea

Using the method of Example 1 excepting that each mole of aminoethyl ethanolamine is replaced by two moles of 3-amino-2,2-dimethyl-1-propanol, a mixture containing N,N'-bis-(3-hydroxy-2,2-dimethyl-1-propyl) urea was obtained.

EXAMPLE 11

Preparation of N,N'-bis-(2-hydroxyethyl)-N,N'-Dimethyl Urea

Using the method of Example 1 excepting that each mole of aminoethyl ethanolamine is replaced by two moles of N-methyl ethanolamine, a mixture containing N,N'-bis-(2-hydroxyethyl)-N,N'-dimethyl urea is obtained.

EXAMPLE 12

When Example 4 is followed except that a chemically equivalent amount of N,N'-dimethyl urea is substituted for N-(2-hydroxyethyl)-N,N'-ethylene urea, a hard, tough, glossy coating is obtained.

EXAMPLE 13

When Example 4 is followed except that a chemically equivalent amount of N-butyl-N'-(2-hydroxy-1-propyl) urea is substituted for N-(2-hydroxyethyl)-N,N'-ethylene urea, a hard, tough, glossy coating is obtained.

EXAMPLE 14

When Example 4 is followed except that a chemically equivalent amount of N,N'-(2-hydroxyethyl)-N,N'-dimethyl urea is substituted for N-(2-hydroxyethyl)-N,N'-ethylene urea, a hard, tough, glossy coating is obtained.

EXAMPLE 15

Preparation of N-Methyl-N'-Butyl Urea

280.32 Grams (3.84 moles) of butylamine and 300 ml of dichloromethane were charged to a round bottom flask equipped with stirrer, cold bath, thermometer, addition funnel and reflux condenser. 229.8 grams (4.03 moles, a 5% excess) of methyl isocyanate were charged to the addition funnel and added to the flask contents over four hours keeping the contents between 0 and 35°C. After an additional hour of stirring the exothermic reaction subsided and the mixture was allowed to stand overnight.

The mixture was freed of solvent and lights in a vacuum rotary evaporator leaving a white solid. Further drying in a vacuum desiccator gave material melting at 65-68°C. The proposed structure of the product is in agreement with its proton NMR spectrum and infrared spectrum.

EXAMPLE 16

Preparation of N-Methyl-N'-Isopropyl Urea

284.9 grams (4.81 moles) of isopropylamine were placed in a round bottom flask equipped with stirrer, thermometer, reflux condenser and addition funnel. 250.3 grams (4.39 moles) of methyl isocyanate were charged to the addition funnel and added slowly to the flask with stirring. During the course of the reaction, solids began to precipitate and approximately 300 ml of toluene were added to maintain fluidity. After all of the methyl isocyanate had been added and the exothermic reaction had subsided, the heterogeneous mixture was heated to reflux and solids dissolved for transfer to a stripping flask. The mixture was freed of solvent and lights under vacuum on a rotary evaporator and with a hot water bath for heat input. The crude product (484.6 g, 95% crude yield) was 90.4 area % pure by gas chromatography and melted at 91-97°C.

Mixtures of this material with 1-propyl-3-butyl urea exhibited significant melting range depressions. Addition of small amounts of liquid carbamates to these mixtures resulted in further melting range depressions such that the resulting mixtures were partly liquid at ambient temperature.

Differential scanning calorimetry of several binary mixtures of this material with N-propyl-N'-butyl urea indicated that a eutectic mixture of about 65% N-propyl-N'-butyl urea and 35% N-methyl-N'-isopropyl urea existed and that its melting point was about 30°C. This is about a 40 to 60°C melting point depression from that of the individual components.

EXAMPLE 17

N-Propyl-N'-Butyl Urea Preparation

205.76 grams (3.48 moles) of n-propylamine were charged to a 1-1., round bottom flask equipped with stirrer, thermometer, reflux condenser and addition funnel. 313.7 grams (3.16 moles) of butyl isocyanate were charged to the addition funnel and added to the flask with stirring at a rate which maintained the contents at about 60-65°C. Toluene was added to dissolve the solid product for transfer to a stripping vessel. The crude product solution was about 92 area % ureas on a solvent-free basis by gas chromatography. The crude product solution was freed of most of the solvent and lights under vacuum with a rotary evaporator leaving 480.6 g of pale yellow solid melting from 68-70°C. Infrared analysis showed a clean spectrum in agreement with the proposed structure's functionality. The gas chromatograph showed three, major peaks in a 1:2:1 ratio indicating possible 'scrambling' of alkyl groups and a statistically determined ratio of products.

EXAMPLE 18

N-Propyl-N'-Butyl Urea Preparation at Low Temperature

205.8 grams (3.48 moles) of n-propylamine and 250 ml of dichloromethane were charged to a round bottom flask equipped with stirrer, thermometer, reflux condenser and dropping funnel. 313.7 grams (3.16 moles) of butyl isocyanate were added to the dropping funnel and then metered into the

flask with stirring and strong external cooling (solid $CO_2$ bath) at a rate slow enough to maintain the contents generally below 0°C except for brief excursions to higher temperatures. The resulting mixture was left to stand overnight and then freed of solvent and lights under vacuum with a rotary evaporator leaving 462.3 g of crude product (92.6% crude yield). After further drying of a portion under vacuum a 97.6 area % purity was recorded by gas chromatography. The product contained substantially only one compound by gas chromatography. It melted at 70-72°C.

As noted in Example 16, evidence for the existence of a eutectic between this compound and N-methyl-N'-isopropyl urea was obtained by differential scanning calorimetry.

EXAMPLE 19

Preparation of N-butyl-N'-(2-Ethyl-1-Hexyl) Urea

128.98 grams (1 mole) of 2-ethyl-1-hexylamine and 500 ml of toluene were charged to a flask equipped with dropping funnel, thermometer, condenser, stirrer, Dean & Stark trap and condenser. The contents of the flask were refluxed for 3 hours to remove water, then cooled to 0°C. 99.6 grams (1 mole) of butyl isocyanate were charged to the dropping funnel and added during 1 hr 5 min to the stirred flask contents. The flask contents remained at 30° or less during the addition.

The resulting crude reaction product was freed of the bulk of volatiles by stripping (final conditions 204°C at 1 bar). A small sample was distilled with the bulk of the material distilling 157-164°C at -(.001 mm Hg) 0.00133 mbar.

A sample of distilled material was analyzed by GC showing three major product peaks in the approximate area ration of 2:5:1 in order of decreasing volatility.

## Claims

1. A method of making high solids coating compositions which comprises blending:

(A) at least one crosslinkable organic polymer free of amide groups;

(B) solvent;

(C) at least one reactive urea derivative having the generic formula:

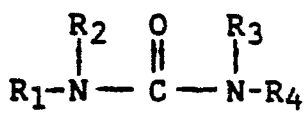

wherein

each of $R_1$, $R_2$, $R_3$ and $R_4$ is a monovalent radical selected from hydrogen, alkyl groups having 1 to 10 carbon atoms, hydroxyalkyl groups having 2 to 4 carbon atoms and one or more hydroxyl groups, hydroxyalkyleneoxy groups having one or more hydroxyl groups and hydroxypolyalkyleneoxy groups having one or more hydroxyl groups and with the provisos that:

(i) the urea contains at least one -NH and one -OH group or at least 2 OH groups or at least 2 -NH groups;

(ii) $R_1$ and $R_2$ or $R_1$ and $R_3$ can be linked to form a ring structure; and

(iii) $R_1$, $R_2$, $R_3$ and $R_4$ are never all hydrogen at the same time;

(D) a crosslinking amount of a crosslinking agent; and

(E) optionally a catalytic amount of a crosslinking catalyst.

2. The method claimed in claim 1 wherein $R_1$ is 2-hydroxyethyl, $R_2$ and $R_3$ are linked to form an ethylene bridge and $R_4$ is hydrogen.

3. The method claimed in claim 1 wherein $R_1$ and $R_3$ are hydrogen, $R_2$ is butyl and $R_4$ is hydroxyethyl.

4. The method claimed in claim 1 wherein $R_1$ and $R_3$ are each hydrogen, $R_2$ is methyl or propyl and $R_4$ is butyl.

5. The method claimed in claim 1 wherein $R_1$ and $R_3$ are each methyl and $R_2$ and $R_4$ are each hydroxyethyl.

6. The method claimed in claim 1 wherein $R_1$ and $R_2$ are each hydrogen and $R_3$ and $R_4$ are each hydroxyethyl.

7. The method claimed in claim 1 wherein $R_1$ is hydrogen, $R_2$ and $R_3$ are each hydroxyethyl and $R_4$ is methyl.

8. The method claimed in claims 1 to 7 wherein the organic polymer is a hydroxyl containing epoxy fatty acid ester or a hydroxyl containing polyester or hydroxyl containing alkyd resin or a hydroxyl containing acrylic interpolymer or a homogeneously dispersed, hydroxyl containing acrylic interpolymer.

9. The method claimed in claims 1 to 8 wherein the crosslinking agent is hexamethoxymethylmelamine.

10. The method claimed in claims 1 to 9 wherein the crosslinking catalyst is p-toluenesulfonic acid.

11. The method of making high solids coating compositions as claimed in claims 1 to 10 by additionally adding

(F) At least one reactive carbamate derivative have the generic formula

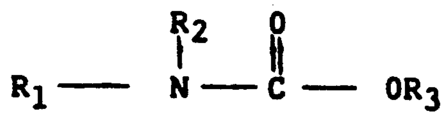

wherein

each of $R_1$ and $R_2$ is a monovalent radical selected from hydrogen, alkyl groups havimg 1 to 10 carbon atoms, hydroxyalkyl groups having 2 to 4 carbon atoms and one or more hydroxyls, hydroxalkylenoxy groups having one or more hydroxyl groups, and hydroxypolyalkyleneoxy groups having one or more hydroxyl groups, and $R_3$ is a monovalent radical selected from alkyl groups having 1 to 10 carbon atoms, hydroxyalkyl groups having 2 to 4 carbon atoms and one or more hydroxy groups, hydroxyalkyleneoxy groups having one or more hydroxyl groups and hydroxypolyalkylenoxy groups having one or more hydroxyl groups, with the provisios that the carbamate contains at least one -NH and one -OH group or at least 2 -OH groups, and that $R_1$ and $R_2$ or $R_1$ and $R_3$ can be linked to form a ring structure.

DIAGRAM OF HIGH SOLIDS DISPERSION COATING

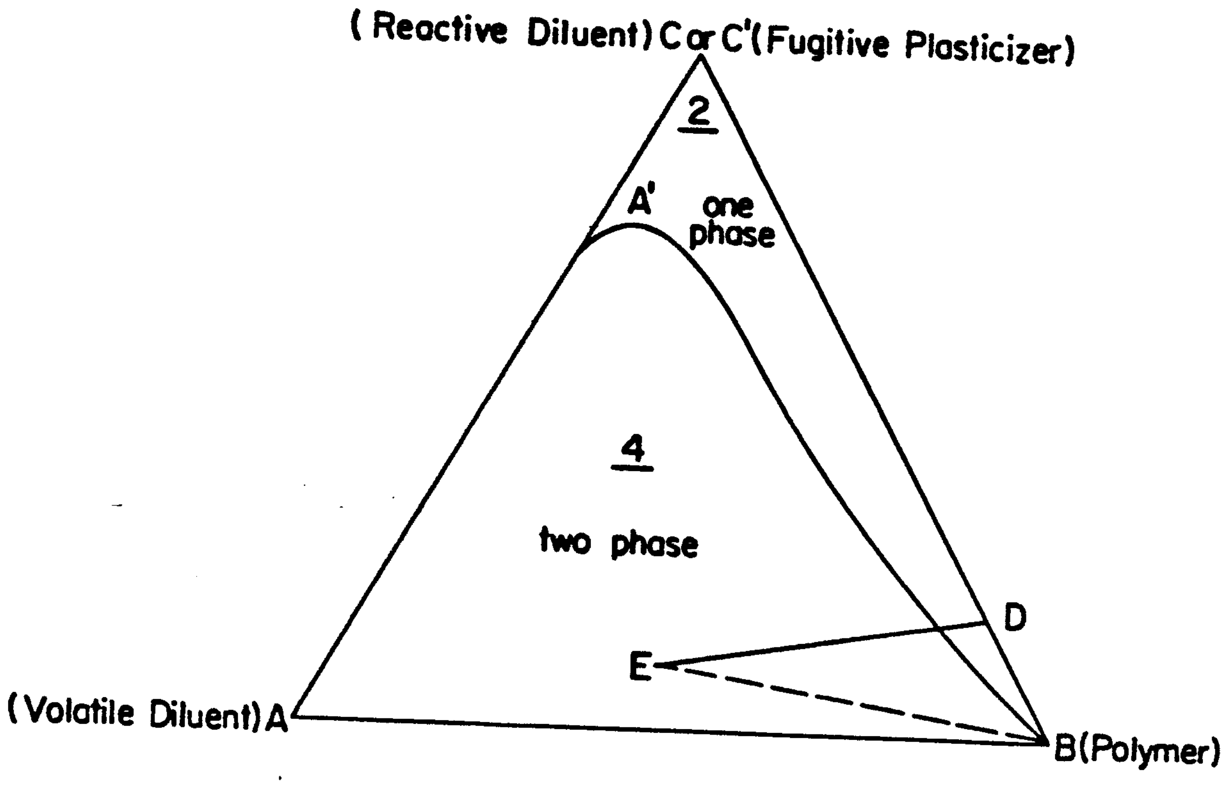


FIG. 1

PHASE DIAGRAM OF HIGH SOLIDS SOLUTION COATING

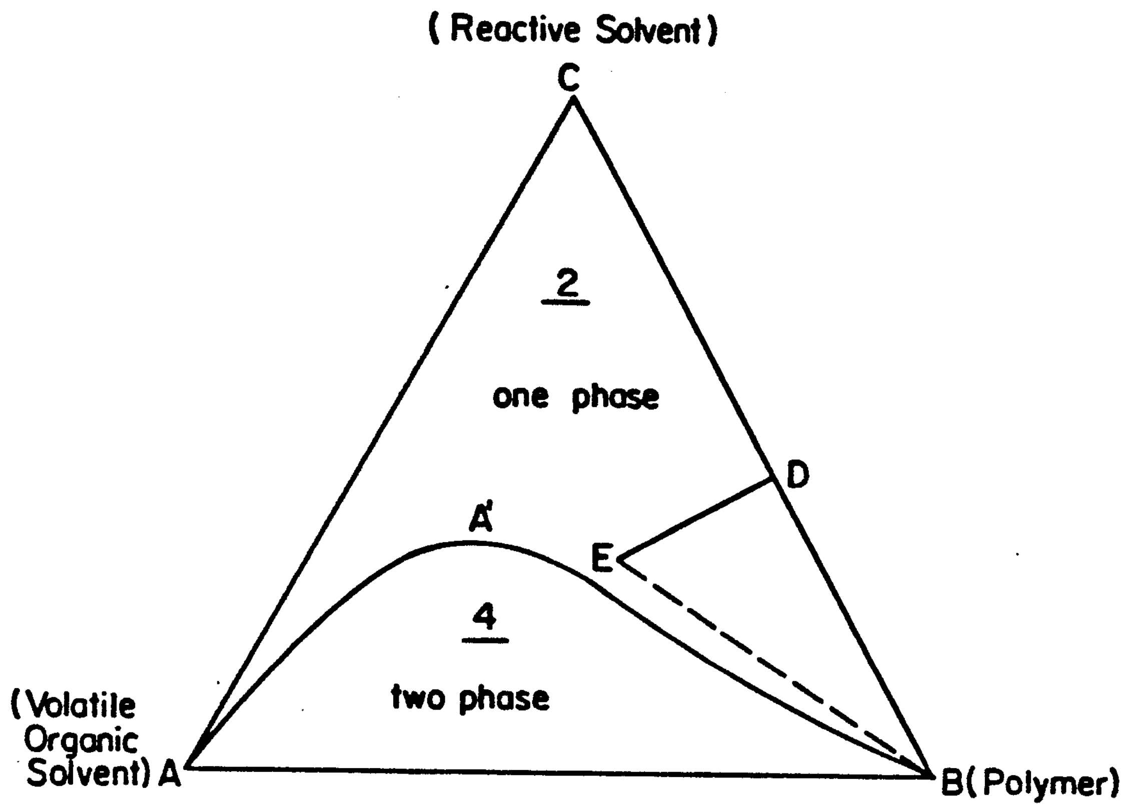


F I G. 2

European Patent Office

# EUROPEAN SEARCH REPORT

Application number

EP 86 11 0315

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 392 090 (BAYER) * Claims 1,4,6,7; page 2, lines 16,17; page 7, line 1 - page 8, line 11; page 10, example 1 * --- | 1,8-10 | C 09 D 7/12 |
| A | FR-A-2 300 121 (BAYER) --- | | |
| A | US-A-4 520 167 (W.J. BLANK) * Abstract * --- | 11 | |
| A | US-A-4 515 835 (R.R. KUHN) ----- | | |

| TECHNICAL FIELDS SEARCHED (Int. Cl.4) |
|---|
| C 09 D |

The present search report has been drawn up for all claims

| Place of search | Date of completion of the search | Examiner |
|---|---|---|
| THE HAGUE | 05-11-1986 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82